# FASCICULE DE BREVET EUROPEEN

(11) **EP 1 396 100 B1**
(45) Date de publication et mention de la délivrance du brevet: **24.01.2007**
(21) Numéro de dépôt: 02730332.0
(22) Date de dépôt: 04.04.2002
(51) Int. Cl.: H04B 10/20

(54) **DISPOSITIF DE COMMUNICATION OPTIQUE ENTRE DES MODULES ELECTRONIQUES**
OPTISCHE KOMMUNIKATIONSVORRICHTUNG ZWISCHEN ELEKTRONISCHEN BAUGRUPPEN
DEVICE FOR OPTICAL COMMUNICATION BETWEEN ELECTRONIC MODULES

(30) Priorité: 11.06.2001 FR 0107565
(43) Date de publication de la demande: 10.03.2004
(73) Titulaire: SCHNEIDER ELECTRIC INDUSTRIES SAS, 92500 Rueil-Malmaison (FR)
(72) Inventeur: LOVATO, Jean-Louis, F-38330 Biviers (FR); BETTEGA, Eric, F-38120 Le Fontanil Cornillon (FR); MINIER, Vincent, F-38640 Claix (FR); FAVRE, Jean-Jacques, F-38420 Revel (FR)
(74) Mandataire: Poirier, Jean-Michel Serge
(86) Numéro de dépôt international: PCT/FR2002/001165
(87) Numéro de publication internationale: WO 2002/101958

(56) Documents cités:
- EP-A- 0 833 176
- WO-A-00/17687
- DE-A- 19 709 174
- US-A- 5 091 985

## Description

L'invention concerne un dispositif de communication optique entre des modules électroniques comportant un barreau optiquement conducteur, ayant des première et seconde extrémités, destiné à être couplé optiquement, par couplage latéral, à des modules électroniques latéraux disposés latéralement le long du barreau, et comportant des moyens réflecteurs latéraux disposés sur une partie longitudinale de la surface externe du barreau opposée aux modules latéraux.

Il existe un grand nombre de dispositifs permettant l'interconnexion optique de modules électroniques.

Dans un premier type de dispositif, tel que décrit dans le document EP-A-587066 par exemple, un « bus » de communication optique est formé par une pluralité d'appareils électriques modulaires disposés côte à côte. Chaque appareil est équipé sur une face latérale d'un récepteur optoélectronique et sur la face latérale opposée d'un émetteur électro-optique connecté électriquement au récepteur. Chaque appareil peut ainsi communiquer optiquement avec les appareils adjacents. Ce type de dispositif présente un inconvénient majeur. En effet, si l'un des appareils est en panne, la chaîne de communication est interrompue.

Il existe également des bus optiques de fond de panier, constitués généralement par une plaque de verre ou de matière plastique transparente comportant des moyens de couplage optique avec des cartes de circuit imprimé, chaque carte comportant au moins un émetteur électro-optique et un récepteur optoélectronique. Divers moyens de couplage, disposés sur la face du bus adjacente aux cartes de circuit imprimé, ont été décrits, notamment des fenêtres dans un matériau absorbant la lumière (WO-A-8503179), des rainures (GB-A-2.208.566) et des réseaux de diffraction (brevet US 5.091.985). Le brevet US 4.744.617 décrit un bus optique de section circulaire, carrée ou polygonale, comportant comme éléments de couplage des surfaces réfléchissantes inclinées formées dans la face du bus opposée aux cartes de circuit imprimé. Dans ces différents dispositifs, les éléments de couplage sont ponctuels et disposés à des emplacements prédéterminés, associés à chacune des cartes de circuit imprimé. Le nombre de cartes de circuit imprimé ainsi que leurs emplacements sont ainsi prédéterminés.

Dans le document EP-A-249 746, une fibre optique multimode comportant un coeur diffuseur permet la communication optique entre des stations émettrices et réceptrices qui lui sont couplées latéralement. Les stations peuvent être disposées à n'importe quel emplacement le long de la fibre optique. Dans ce dispositif, des lentilles optiques interposées entre la fibre et chacune des stations doivent être disposées à proximité immédiate de la fibre. Le positionnement radial des lentilles et des stations associées est relativement critique.

Dans le document WO-A-9839861 un système de transmission optique bidirectionnel entre des composants électroniques utilise de la lumière diffusée dans l'air à l'intérieur d'un canal délimité par la surface interne, optiquement réfléchissante, d'une enveloppe métallique ou en matière plastique en forme de U. Les éléments optoélectroniques émetteur et récepteur des composants électroniques peuvent être disposés à n'importe quel emplacement le long du canal, mais doivent par contre s'avancer à l'intérieur du canal. La distance de ces composants au canal est donc définie de manière précise.

L'invention a pour but un dispositif de communication optique ne présentant pas les inconvénients des dispositifs antérieurs. Un tel dispositif doit notamment permettre un couplage optique de modules électroniques sans nécessiter de connectique particulière, ni un positionnement précis des modules.

Selon l'invention, ce but est atteint par le fait que les modules latéraux sont des modules esclaves destinés à communiquer avec un module maître couplé optiquement, axialement, à la première extrémité du barreau, le barreau comportant une partie utile, munie des moyens réflecteurs latéraux formant une zone réfléchissante sensiblement continue, le barreau, qui a une section transversale dont la surface est supérieure à 15 mm², et les moyens réflecteurs latéraux définissant le long de la partie utile du barreau une zone longitudinale continue de couplage latéral, de manière à permettre un couplage optique bidirectionnel du module maître avec un module latéral disposé en un emplacement quelconque le long de la partie utile du barreau, la zone de couplage latéral s'étendant sur au moins un centimètre à l'extérieur du barreau.

Selon un premier développement de l'invention, les moyens réflecteurs latéraux sont constitués par une pluralité d'encoches adjacentes constituant une zone réfléchissante en forme de dents de scie le long de la partie utile du barreau.

Selon un second développement de l'invention, les moyens réflecteurs latéraux comportent une étroite bande réfléchissante.

D'autres avantages et caractéristiques ressortiront plus clairement de la description suivante de modes particuliers de réalisation, donnés à titre d'exemples non limitatifs et représentés sur les dessins annexés dans lesquels :
La figure 1 représente schématiquement un dispositif selon l'invention,
La figure 2 représente plus en détail, un module électronique d'un dispositif selon l'invention,
La figure 3 illustre un barreau optique et la zone de couplage latéral d'un dispositif selon l'invention,
Les figures 4 à 12 représentent divers modes de réalisation d'un réflecteur latéral d'un dispositif selon l'invention,
Les figures 13 à 16 représentent différents modes de réalisation de la section transversale d'un barreau optique d'un dispositif selon l'invention,
La figure 17 représente plus en détail un mode particulier de réalisation du couplage du barreau optique à un module maître d'un dispositif selon l'invention,
La figure 18 illustre la disposition d'un dispositif selon l'invention dans un tableau électrique,
La figure 19 illustre une variante de réalisation du dispositif selon la figure 18,
La figure 20 illustre un mode particulier de réalisation d'un dispositif selon l'invention.

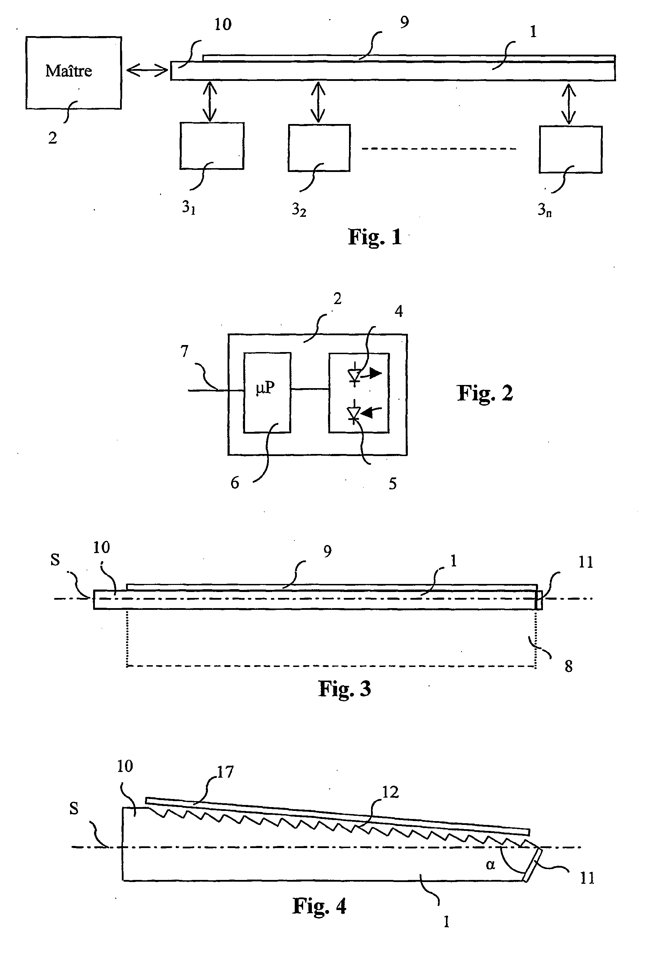

Le dispositif de communication optique représenté à la figure 1 comporte un barreau optique 1 constituant un bus optique de communication bidirectionnelle entre un module électronique maître 2 et n modules électroniques esclaves 3 (3₁, 3₂, ... , 3ₙ). Chaque module électronique comporte, comme le module maître 2 représenté à la figure 2, un émetteur électro-optique 4 (diode laser, diode électroluminescente,...) et un récepteur optoélectronique 5 (photodiode, phototransistor), couplés électriquement à un ensemble électronique de traitement 6, de préférence un microprocesseur. Celui-ci peut être couplé électriquement par exemple par un bus 7, à des modules externes, superviseurs, capteurs, ou actionneurs.

Le barreau optique 1 est réalisé en un matériau électriquement isolant, optiquement conducteur, tel que le verre, la silice ou, de préférence, en matière plastique, ce dernier matériau présentant l'avantage dé pouvoir être facilement moulé. Diverses matières thermoplastiques peuvent être utilisées comme le polycarbonate, le PMMA (polyméthacrylate de méthyle), le PVC, le plexiglass, etc...

Le barreau optique 1 a une section supérieure à 15 mm², de préférence comprise entre 25 et 100 mm2, très supérieure à la section de fibres optiques classiques. Dans un mode préférentiel de réalisation, il est rigide et a une longueur de l'ordre de 50 cm à 1 m.

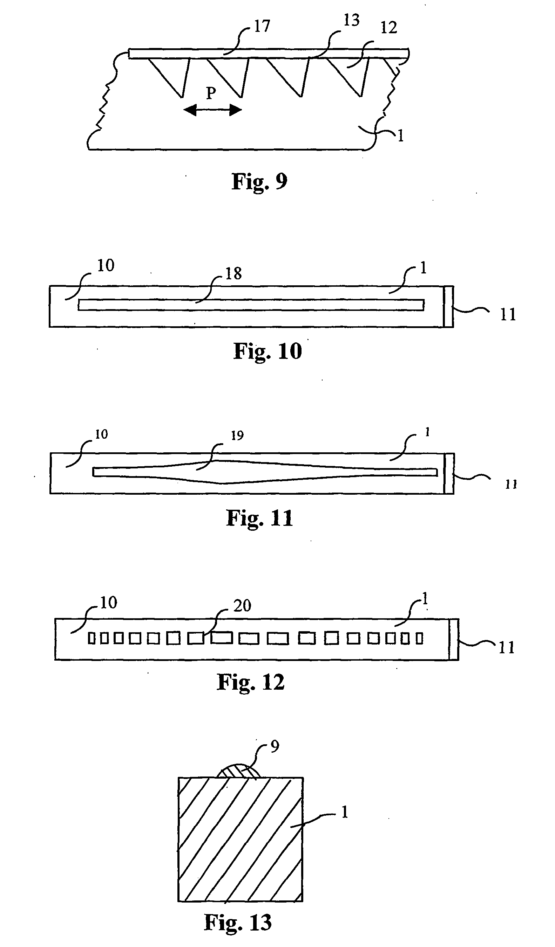

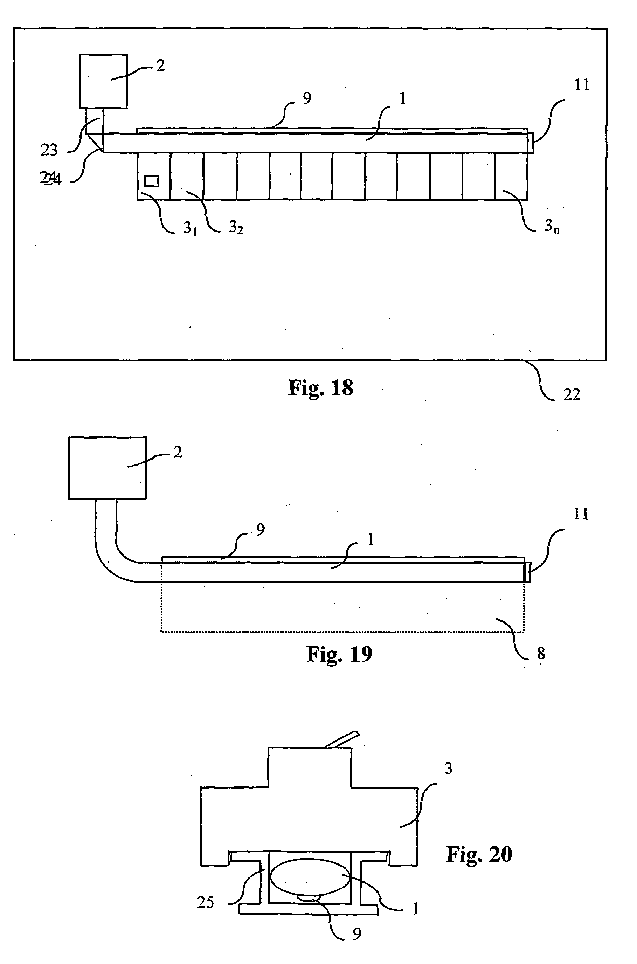

Un tel barreau permet d'assurer la communication optique, sur de courtes distances, entre le module maître 2 et les modules esclaves 3. Le module maître 2 est couplé optiquement, axialement, à une première extrémité du barreau (à gauche sur les figures 1, 3 à 12, 17 à 19). Les modules latéraux 3 sont disposés côte à côte latéralement le long du barreau et communiquent optiquement, dans une zone de couplage latéral 8, représentée aux figures 3 et 19, avec le barreau optique 1. La zone de couplage latérale 8 est située à l'opposé d'un réflecteur latéral. Elle s'étend à l'extérieur du barreau sur au moins un centimètre, typiquement plusieurs centimètres, par exemple, perpendiculairement à l'axe longitudinal S du barreau optique 1. Le réflecteur latéral 9 forme une zone réfléchissante sensiblement continue sur une partie longitudinale de la surface externe du barreau opposée aux modules latéraux 3. La largeur de la zone réfléchissante est de préférence, limitée à moins de 25% du périmètre de la section transversale du barreau optique (figures 10 à 16 et 20) pour limiter les pertes.

Dans un mode de réalisation préférentiel, le barreau optique 1 comporte, à sa première extrémité, un tronçon d'extrémité 10 dépourvu de réflecteur latéral 9. Les modules latéraux 3 ne peuvent être disposés le long du tronçon d'extrémité 10, mais uniquement le long de la partie utile du barreau 1, face au réflecteur latéral 9. Un réflecteur d'extrémité 11 (figures 3, 4, 10 à 12, 18 et 19) est, de préférence, disposé sur une seconde extrémité du barreau optique, opposée à la première extrémité.

Dans un mode de réalisation préféré, représenté à la figure 4, le barreau optique 1 a une forme biseautée, sa section transversale diminuant, de manière sensiblement continue, de la première extrémité à la seconde extrémité, de manière à limiter les pertes dans le barreau optique et à optimiser l'efficacité du dispositif. A titre d'exemple, la section transversale du barreau optique peut varier entre 100 mm² à la première extrémité et 50 mm² à la seconde extrémité. De plus, la seconde extrémité, de préférence réfléchissante (11) est inclinée de manière à renvoyer les ondes lumineuses en direction du réflecteur latéral 9. A titre d'exemple, l'angle α entre l'axe longitudinal S du barreau 1 et la seconde extrémité peut être compris entre 70° et 90°. Dans un mode de réalisation préférentiel α= 80°.

Différents modes de réalisation du réflecteur latéral 9 sont illustrés aux figures 4 à 12. Le réflecteur latéral a pour fonction essentielle de transformer partiellement, avec des pertes minimales, la propagation sensiblement radiale des ondes lumineuses en provenance d'un module esclave 3 en propagation sensiblement axiale et la propagation sensiblement axiale des ondes lumineuses en provenance du module maître 2 en propagation sensiblement radiale susceptible d'être détectée par les modules esclaves 3. Les surfaces non utilisées pour cette fonction doivent favoriser le guidage des ondes lumineuses internes au barreau optique 1.

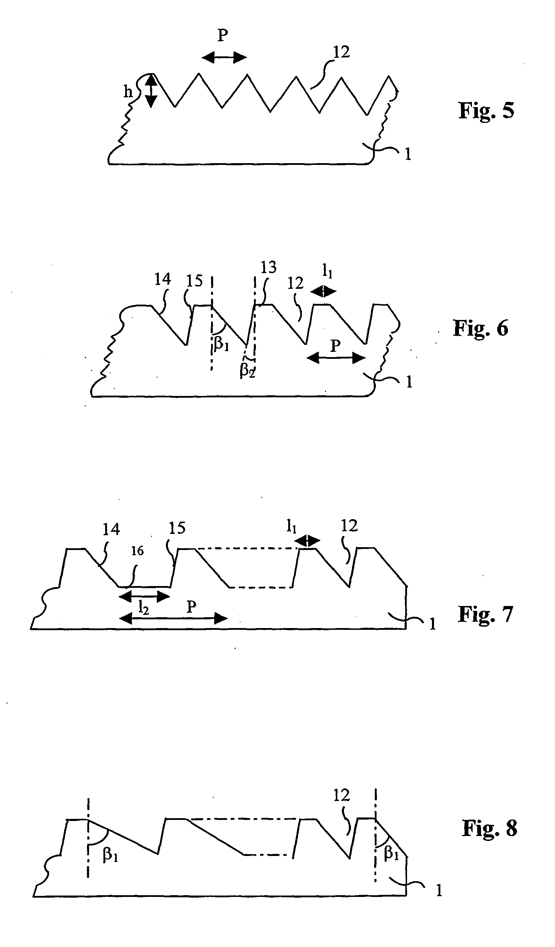

Selon un premier mode de réalisation du réflecteur latéral 9, celui-ci est constitué par une pluralité d'encoches 12 adjacentes, de profondeur h, constituant une zone réfléchissante sensiblement continue, en forme de dents de scie de pas p, le long de la partie utile du barreau. Chaque encoche peut être asymétrique (figures 4 et 6 à 8) ou symétrique (figure 5). Selon une variante préférentielle, représentée à la figure 6, deux encoches 12 adjacentes sont séparées par un méplat externe 13, de largeur 1₁.

Lorsque les encoches 12 sont asymétriques, elles sont chacune délimitées par une première face oblique 14 faisant un angle β₁ avec un axe perpendiculaire à l'axe longitudinal S du barreau optique, et une seconde face oblique 15, plus proche de la seconde extrémité du barreau optique et faisant un angle β₂ inférieur à β₁, avec l'axe perpendiculaire à l'axe longitudinal S.

Pour améliorer le rendement d'extraction des ondes lumineuses le long du barreau optique 1 et pour l'homogénéiser, il est possible de modifier le pas p qui diminue progressivement entre la première et la seconde extrémité du barreau optique. Selon une variante (figure 7), on introduit au fond des encoches 12, entre les faces obliques 14 et 15, un méplat interne 16 de largeur 1₂ variable, diminuant progressivement entre la première et la seconde extrémité. Sur la figure 7, le méplat interne 16 est réduit à zéro à la seconde extrémité du barreau optique. Selon une autre variante (figure 8), la modification du pas p est obtenue par une modification de l'angle β₁, qui diminue progressivement entre les première et seconde extrémités du barreau. Ces deux variantes peuvent également être associées.

Lorsque le pas est variable, selon le mode de réalisation de la figure 8, l'angle β₁ peut varier de 90°; cas où il n'y a pas extraction de l'onde lumineuse près de la première extrémité, à 45° à la seconde extrémité du barreau optique.

A titre d'exemple, les dimensions du réflecteur latéral peuvent être les suivantes :
p=2mm
h = 1mm
l₁= 0,5 mm
β₁ = 45°
β₂ = 27°

Pour augmenter le rendement d'extraction, de 10 à 15% environ, un réflecteur latéral additionnel 17 peut être disposé parallèlement à la zone réfléchissante constituée par les encoches, de manière à renvoyer dans le barreau optique 1 les rayons lumineux qui fuient vers l'extérieur du côté du réflecteur latéral 9. Le réflecteur latéral additionnel 17 est constitué par une étroite bande réfléchissante localisée à proximité immédiate du réflecteur 9, soit à faible distance (1 à 2 mm par exemple) comme sur la figure 4, soit directement en contact avec les méplats externes 13, comme sur la figure 9.

Le réflecteur latéral additionnel 17 peut être fixé par tout moyen approprié. Selon un mode de réalisation particulier, il peut faire partie intégrante d'une pièce en plastique blanche réfléchissante ayant pour fonction supplémentaire le maintien et la protection du barreau optique 1. S'il est en contact avec les méplats externes 13 (figure 9), il peut être fixé par collage ou formé par surmoulage sur le barreau optique.

Selon des variantes de l'invention représentées aux figures 10 à 12, le réflecteur latéral 9 peut être constitué uniquement par une étroite bande réfléchissante, formée sur la partie utile du barreau, bien que les performances soient alors sensiblement inférieures à celles d'un dispositif avec encoches selon les figures 4 à 9. Dans ce cas, comme dans le cas du réflecteur latéral additionnel 17 (figures 4 et 9) plusieurs modes de réalisation sont envisageables. Sur la figure 10, la bande réfléchissante est une bande rectangulaire continue (18). Selon une variante de réalisation, représentée à la figure 11, la bande réfléchissante est une bande continue 19 de largeur variable, minimale à proximité de la première extrémité du barreau, puis croissante jusqu'à un maximum et décroissante ensuite. Ceci permet de minimiser la surface utile du réflecteur latéral à ses extrémités. Selon une autre variante de réalisation, représentée à la figure 12, la bande réfléchissante est fragmentée en zones réfléchissantes élémentaires, constituant ainsi une bande 20 discontinue. Les zones réfléchissantes qui la constituent ont une longueur et/ou une surface variables, minimale près de la première extrémité du barreau et augmentant de façon continue en direction de la seconde extrémité. Les caractéristiques des bandes réfléchissantes 19 et 20 peuvent être combinées.

La bande réfléchissante (18, 19, 20) peut être formée par tout moyen approprié sur le barreau optique, par exemple par surmoulage, par dépôt d'une peinture ou par collage. Elle peut également être constituée par des micro-miroirs ou par un film réflecteur qui se comporte comme un ensemble de micro-miroirs.

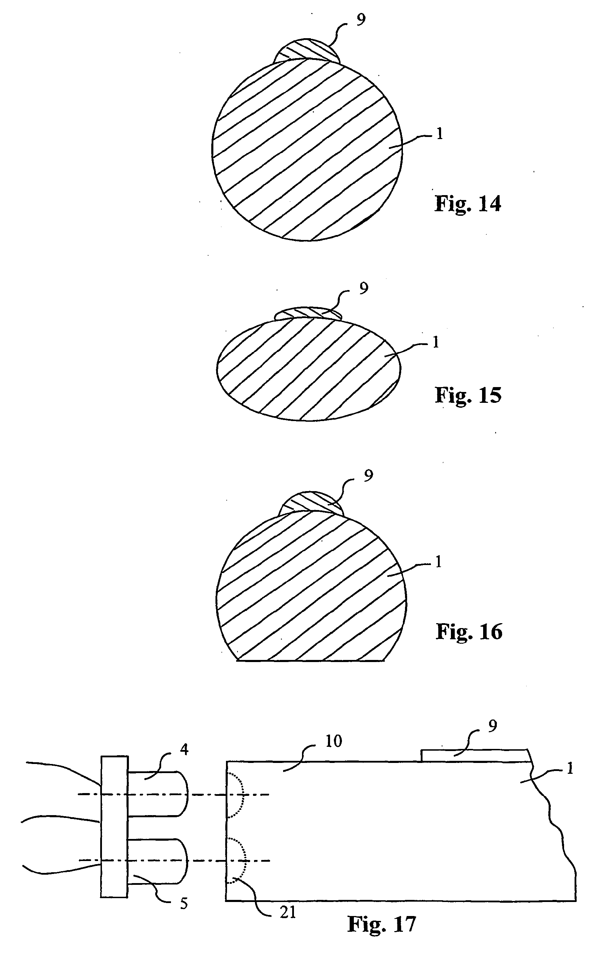

La section transversale du barreau optique 1 peut être rectangulaire (figure 13), le réflecteur latéral 9 étant disposé sur une première face latérale du barreau et les modules esclaves 3 disposés le long du barreau, en regard d'une face latérale opposée à la première. La section est, de préférence, circulaire (figure 14) ou ovoïde (figures 16 et 20), le réflecteur latéral étant dans ce cas disposé sur une face aplatie du barreau.

Le barreau optique 1 est de préférence formé, en même temps que les encoches 12, par moulage par injection d'une matière plastique transparente à la longueur d'onde d'émission des émetteurs électro-optiques 4 des modules électroniques 2 et 3 et présentant de bonnes propriétés de tenue en température. En variante, il peut également être fabriqué par thermoformage ou par extrudage. Les encoches 12 peuvent également être obtenues par usinage ultérieur du barreau optique.

La longueur d'onde utilisée peut être choisie dans le visible (dans le vert par exemple) ou, de préférence, dans l'infrarouge pour lequel on dispose actuellement d'émetteurs et de récepteurs à haute intégration. Des composants optoélectroniques émetteurs-récepteurs intégrés pour la transmission de données "de type dit IRDA" peuvent remplir cette fonction. Le protocole d'échange de données, de tout type connu, est géré par le module maître 2. Selon un mode de réalisation préférentiel, celui-ci émet périodiquement une trame initialisant les échanges. A la réception de cette trame, chaque module esclave 3 émet dans une fenêtre temporelle qui lui est allouée, la scrutation s'achevant après émission par le dernier module esclave 3n. L'absence, ou le dysfonctionnement d'un module esclave est détectée par son silence dans la fenêtre temporelle allouée.

La figure 17 illustre un mode particulier de raccordement du barreau optique 1 au module maître 2. Le barreau 1 comporte à sa première extrémité deux gorges 21 destinées à l'encastrement de diodes constituant respectivement l'émetteur électro-optique 4 (diode électroluminescente) et le récepteur optoélectronique 5 (photodiode) du module maître 2.

Une application d'un dispositif selon l'invention, dans un tableau électrique 22 est illustrée à la figure 18. Une pluralité d'appareils électriques modulaires de contrôle/commande et/ou de protection, par exemple des disjoncteurs, des interrupteurs et/ou des relais, constituant les modules esclaves 3₁, 3₂, ...,3ₙ, sont disposés côte à côte dans le tableau, le long d'un barreau optique 1 fixé par tout moyen approprié dans le tableau. Afin de maximiser le nombre de modules esclaves pouvant communiquer par l'intermédiaire du barreau optique 1, le module maître 2, constitué par un module de contrôle /commande est de préférence disposé en un emplacement déporté du tableau. Sur la figure 18, le barreau 1 est horizontal et le module maître 2 est déporté verticalement vers le haut. Sa connexion optique axiale avec la première extrémité du barreau 1 est assurée au moyen d'un barreau optique additionnel 23 disposé perpendiculairement au barreau (verticalement sur la figure 18) et comportant, à sa partie inférieure sur la figure 18, une extrémité de couplage avec la première extrémité du barreau 1. L'extrémité de couplage du barreau optique additionnel 23 comporte une face externe en contact avec la première extrémité du barreau 1 et une surface d'extrémité réfléchissante 24 faisant un angle de 45° avec la première extrémité du barreau.

Selon une variante de réalisation illustrée à la figure 19, le barreau 1 est coudé à sa première extrémité, de manière à comporter une partie extrême, perpendiculaire à la partie utile du barreau, permettant le déport du module maître 2.

Selon le mode particulier de réalisation d'un dispositif selon l'invention illustré à la figure 20, le barreau optique 1, de section transversale ovoïde, est logé au fond d'un rail 25, de type DIN, par exemple, destiné à servir de support à des modules esclaves 3. Les modules esclaves 3 sont classiquement disposés côte à côte sur le rail. Ils comportent chacun des éléments émetteur 4 et récepteur 5 à leur partie inférieure tournée vers l'intérieur du rail. Ils peuvent ainsi communiquer avec un module maître par l'intermédiaire du bus optique constitué par le barreau. Une telle disposition permet de compléter les tableaux existants non pourvus de cette fonction de communication optique, sans nécessiter d'adaptation particulière pour le montage du barreau.

A titre d'exemple, dans un dispositif de ce type, 16 modules esclaves de 35mm de large, peuvent communiquer avec un module maître par l'intermédiaire d'un barreau optique 1 ayant une longueur utile de 56 cm, avec des signaux de l'ordre de 100 milliwatts (mW) et un débit de l'ordre de 1 à 10 mégabits.

Avec le dispositif selon l'invention, le positionnement des modules esclaves 3, le long de la partie utile du barreau 1 peut être quelconque et leur localisation latérale n' est pas critique, dans la mesure où il suffit que leurs émetteurs 4 et récepteurs 5 soient localisés à l'intérieur de la zone de couplage latéral 8 qui s'étend, à l'extérieur du barreau, sur au moins un centimètre perpendiculairement à l'axe longitudinal S du barreau 1.

Il est possible d'envisager de doubler le nombre de modules esclaves 3 communiquant avec un même module maître 2 par l'intermédiaire d'un barreau optique 1. Pour cela, un second réflecteur latéral peut être disposé à 90° du réflecteur latéral 9 sur le barreau optique 1. Des modules esclaves 3 peuvent alors être disposés respectivement face au réflecteur latéral 9 et face au second réflecteur latéral.

## Revendications

1. Dispositif de communication optique entre des modules électroniques comportant un barreau (1) optiquement conducteur, ayant une première et une seconde extrémité, destinées à être couplées optiquement, par couplage latéral, à des modules électroniques latéraux (3) disposés latéralement le long du barreau, et comportant des moyens réflecteurs latéraux (9) disposés sur une partie longitudinale de la surface externe du barreau (1) opposée aux modules latéraux (3), dispositif **caractérisé en ce que** les modules latéraux (3) sont des modules esclaves destinés à communiquer avec un module maître (2) couplé optiquement, axialement, à la première extrémité du barreau, le barreau (1) comportant une partie utile, munie des moyens réflecteurs latéraux (9) formant une zone réfléchissante sensiblement continue, le barreau ayant une section transversale dont la surface est supérieure à 15 mm², et les moyens réflecteurs latéraux définissant le long de la partie utile du barreau une zone (8) longitudinale continue de couplage latéral, de manière à permettre un couplage optique bidirectionnel du module maître (2) avec un module latéral (3) disposé en un emplacement quelconque le long de la partie utile du barreau, la zone (8) de couplage latéral s'étendant sur au moins un centimètre à l'extérieur du barreau.

2. Dispositif selon la revendication 1, **caractérisé en ce que** les moyens réflecteurs latéraux (9) sont constitués par une pluralité d'encoches (12) adjacentes constituant une zone réfléchissante en forme de dents de scie le long de la partie utile du barreau (1).

3. Dispositif selon la revendication 2, **caractérisé en ce que** chaque encoche (12) est symétrique.

4. Dispositif selon la revendication 2, **caractérisé en ce que** chaque encoche (12) est asymétrique et est délimitée par une première face oblique (14), faisant un premier angle (β₁) avec un axe perpendiculaire à l'axe longitudinal (S) du barreau (1), et une seconde face oblique (15), plus proche de la seconde extrémité du barreau (1) et faisant un second angle (β₂), inférieur au premier angle (β₁), avec l'axe perpendiculaire à l'axe longitudinal (S) du barreau (1).

5. Dispositif selon la revendication 4, **caractérisé en ce que** les encoches (12) adjacentes ont un pas (p) variable, diminuant progressivement entre les première et seconde extrémités du barreau (1).

6. Dispositif selon la revendication 5, **caractérisé en ce que** les moyens réflecteurs latéraux (9) comportent, au fond des encoches (12), un méplat interne (16) ayant une largeur (1₂) variable, diminuant progressivement entre les première et seconde extrémités du barreau (1).

7. Dispositif selon la revendication 5, **caractérisé en ce que** le premier angle (β₁) diminue progressivement entre les première et seconde extrémités du barreau (1).

8. Dispositif selon l'une quelconque des revendications 2 à 7, **caractérisé en ce que** deux encoches (12) adjacentes sont séparées par un méplat externe.

9. Dispositif selon l'une quelconque des revendications 1 à 8, **caractérisé en ce que** les moyens réflecteurs latéraux (9) comportent une étroite bande réfléchissante (17, 18, 19,20).

10. Dispositif selon la revendication 9, **caractérisé en ce que** la bande réfléchissante est une bande rectangulaire continue (18).

11. Dispositif selon la revendication 9, **caractérisé en ce que** la bande réfléchissante est une bande (20) fragmentée, comportant des zones réfléchissantes élémentaires de longueur variable disposées longitudinalement avec un pas prédéterminé, la longueur des zones réfléchissantes élémentaires, minimale à proximité de la première extrémité du barreau (1), croissant jusqu'à une valeur maximale prédéterminée puis décroissant jusqu'à la seconde extrémité du barreau (1).

12. Dispositif selon la revendication 9, **caractérisé en ce que** la bande réfléchissante est une bande (19) de largeur variable, minimale à proximité de la première extrémité du barreau (1), croissant jusqu'à une valeur maximale prédéterminée puis décroissant jusqu'à la seconde extrémité du barreau.

13. Dispositif selon l'une des revendications 11 et 12, **caractérisé en ce que** la valeur maximale est plus proche de la seconde extrémité du barreau (1) que de la première.

14. Dispositif selon l'une quelconque des revendications 9 à 13, **caractérisé en ce que** la bande réfléchissante (17, 18, 19, 20) est obtenue par dépôt d'un matériau d'indice optique adapté sur la surface externe du barreau (1).

15. Dispositif selon l'une quelconque des revendications 1 à 14, **caractérisé en ce que** le barreau (1) comporte, à sa première extrémité, un tronçon d'extrémité (10) dépourvu de moyens réflecteurs latéraux.

16. Dispositif selon l'une quelconque des revendications 1 à 15, **caractérisé en ce que** le barreau (1) a une section transversale circulaire.

17. Dispositif selon l'une quelconque des revendications 1 à 15, **caractérisé en ce que** le barreau (1) a une section transversale ovoïde.

18. Dispositif selon l'une quelconque des revendications 1 à 15, **caractérisé en ce que** le barreau (1) a une section transversale rectangulaire, les moyens réflecteurs latéraux (9) étant disposés sur une première face latérale du barreau et les modules latéraux (3) disposés le long du barreau, en regard d'une face latérale opposée à la première.

19. Dispositif selon l'une quelconque des revendications 1 à 18, **caractérisé en ce que** la section transversale du barreau (1) diminue de manière continue de la première extrémité du barreau à la seconde.

20. Dispositif selon l'une quelconque des revendications 1 à 19, **caractérisé en ce que** la seconde extrémité du barreau (1) comporte un réflecteur d'extrémité (11).

21. Dispositif selon l'une quelconque des revendications 1 à 20, **caractérisé en ce que** la seconde extrémité du barreau (1) est inclinée (α) par rapport à l'axe longitudinal (S) du barreau.

22. Dispositif selon l'une quelconque des revendications 1 à 21, **caractérisé en ce que** la première extrémité du barreau (1) comporte des moyens (21) d'encastrement d'éléments émetteur électro-optique (4) et récepteur opto-électronique (5) du module maître (2).

23. Dispositif selon l'une quelconque des revendications 1 à 22, **caractérisé en ce que** les modules latéraux (3) sont des appareils électriques, de contrôle/commande ou de protection, disposés dans un tableau électrique (22).

24. Dispositif selon la revendication 23, **caractérisé en ce que** les modules latéraux (3) sont disposés côte à côte le long de la partie utile du barreau (1).

25. Dispositif selon la revendication 24, **caractérisé en ce que** le module maître (2) est disposé en un emplacement déporté du tableau électrique (22) et connecté optiquement à la première extrémité du barreau (1) par un barreau optique additionnel (23) comportant une extrémité de couplage avec la première extrémité du barreau (1)..

26. Dispositif selon la revendication 25, **caractérisé en ce que** le barreau optique additionnel (23) est disposé perpendiculairement au barreau (1), avec une extrémité de couplage comportant une face externe en contact avec la première extrémité du barreau (1) et une surface d'extrémité réfléchissante (24) faisant un angle de 45° avec la première extrémité du barreau.

27. Dispositif selon la revendication 24, **caractérisé en ce que** le barreau (1) est coudé à sa première extrémité.

## Claims

1. Device for optic communication between electronic modules comprising an optically conducting rod (1), having a first and a second end, designed to be optically coupled, by lateral coupling, to lateral electronic modules (3) arranged laterally along the rod, and comprising lateral reflecting means (9) arranged over a longitudinal part of the external surface of the rod (1) opposite the lateral modules (3), device **characterized in that** the lateral modules (3) are slave modules designed to communicate with a master module (2) optically coupled axially to the first end of the rod, the rod (1) comprising a useful part equipped with the lateral reflecting means (9) forming a substantially continuous reflecting zone, the rod having a cross-section the surface whereof is greater than 15 mm², and the lateral reflecting means defining a continuous longitudinal lateral coupling zone (8) along the useful part of the rod so as to enable bi-directional optic coupling of the master module (2) with a lateral module (3) arranged at any location along the useful part of the rod, the lateral coupling zone (8) extending over at least one centimetre outside the rod.

2. Device according to claim 1, **characterized in that** the lateral reflecting means (9) are formed by a plurality of adjacent notches (12) constituting a reflecting zone in the form of serrated teeth along the useful part of the rod (1).

3. Device according to claim 2, **characterized in that** each notch (12) is symmetric.

4. Device according to claim 2, **characterized in that** each notch (12) is asymmetric and is bounded by a first oblique face (14), forming a first angle (β₁) with an axis perpendicular to the longitudinal axis (S) of the rod (1), and a second oblique face (15), closer to the second end of the rod (1) and forming a second angle (β₂), smaller than the first angle (β₁), with the axis perpendicular to the longitudinal axis (S) of the rod (1).

5. Device according to claim 4, **characterized in that** the adjacent notches (12) have a variable pitch (p), decreasing progressively between the first and second ends of the rod (1).

6. Device according to claim 5, **characterized in that** the lateral reflecting means (9) comprise an internal flat surface (16) at the bottom of the notches (12), the flat surface having a variable width (I₂), decreasing progressively between the first and second ends of the rod (1).

7. Device according to claim 5, **characterized in that** the first angle (β₁) decreases progressively between the first and second ends of the rod (1).

8. Device according to any one of the claims 2 to 7, **characterized in that** two adjacent notches (12) are separated by an external flat surface.

9. Device according to any one of the claims 1 to 8, **characterized in that** the lateral reflecting means (9) comprise a narrow reflecting strip (17, 18, 19, 20).

10. Device according to claim 9, **characterized in that** the reflecting strip is a continuous rectangular strip (18).

11. Device according to claim 9, **characterized in that** the reflecting strip is a fragmented strip (20), comprising elemental reflecting zones of variable length arranged longitudinally with preset pitch, the length of the elemental reflecting zones, minimal near to the first end of the rod (1), increasing to a preset maximum value then decreasing up to the second end of the rod (1).

12. Device according to claim 9, **characterized in that** the reflecting strip is a strip (19) of variable width, minimal near to the first end of the rod (1), increasing to a preset maximum value then decreasing up to the second end of the rod.

13. Device according to one of the claims 11 and 12, **characterized in that** the maximum value is closer to the second end of the rod (1) than to the first end thereof.

14. Device according to any one of the claims 9 to 13, **characterized in that** the reflecting strip (17, 18, 19, 20) is obtained by deposition of a material of suitable optic index on the external surface of the rod (1).

15. Device according to any one of the claims 1 to 14, **characterized in that** the rod (1) comprises, at its first end, an end section (10) not equipped with a lateral reflecting means.

16. Device according to any one of the claims 1 to 15, **characterized in that** the rod (1) has a circular cross-section.

17. Device according to any one of the claims 1 to 15, **characterized in that** the rod (1) has an ovoid cross-section.

18. Device according to any one of the claims 1 to 15, **characterized in that** the rod (1) has a rectangular cross-section, the lateral reflecting means (9) being arranged on a first lateral face of the rod and the lateral modules (3) arranged along the rod, facing a lateral face opposite the first face.

19. Device according to any one of the claims 1 to 18, **characterized in that** the cross-section of the rod (1) decreases continuously from the first end of the rod to the second end thereof.

20. Device according to any one of the claims 1 to 19, **characterized in that** the second end of the rod (1) comprises an end reflector (11).

21. Device according to any one of the claims 1 to 20, **characterized in that** the second end of the rod (1) is inclined (α) with respect to the longitudinal axis (S) of the rod.

22. Device according to any one of the claims 1 to 21, **characterized in that** the first end of the rod (1) comprises means (21) for flush-mounted housing of electro-optic transmitter (4) and opto-electronic receiver (5) elements of the master module (2).

23. Device according to any one of the claims 1 to 22, **characterized in that** the lateral modules (3) are electrical control/monitoring and/or protection units, arranged in an electrical panel (22).

24. Device according to claim 23, **characterized in that** the lateral modules (3) are arranged side by side along the useful part of the rod (1).

25. Device according to claim 24, **characterized in that** the master module (2) is situated at a location remote from the electrical panel (22) and optically connected to the first end of the rod (1) by an additional optic rod (23) comprising a coupling end for coupling with the first end of the rod (1).

26. Device according to claim 25, **characterized in that** the additional optic rod (23) is arranged perpendicularly to the rod (1), with a coupling end comprising an external face in contact with the first end of the rod (1) and a reflecting end surface (24) forming an angle of 45° with the first end of the rod.

27. Device according to claim 24, **characterized in that** the rod (1) has an elbow at the first end thereof.

## Patentansprüche

1. Einrichtung zur optischen Kommunikation zwischen Elektronikmodulen, welche Einrichtung einen Lichtleitstab (1) mit einem ersten und einem zweiten Ende, die dazu dienen, durch seitliche Kopplung optisch mit seitlichen Elektronikmodulen (3) gekoppelt zu werden, die seitlich längs des Stabes angeordnet sind, sowie seitliche Reflexionsmittel (9) umfasst, die auf einem Längsabschnitt der den seitlichen Modulen (3) abgewandten Außenseite des Stabes (1) angeordnet sind, **dadurch gekennzeichnet, dass** die seitlichen Module (3) als Slavemodule ausgebildet sind, die dazu dienen, mit einem Mastermodul (2) zu kommunizieren, das in Axialrichtung optisch mit dem ersten Ende des Stabs gekoppelt ist, wobei der Stab (1) einen Nutzabschnitt mit darin ausgebildeten seitlichen Reflexionsmitteln (9) umfasst, die einen annähernd durchgehenden Reflexionsbereich bilden, der Stab eine Querschnittsfläche von mehr als 15 mm² aufweist und die seitlichen Reflexionsmittel längs des Nutzabschnitts des Stabs einen durchgehenden seitlichen Längs-Koppelbereich (8) bilden, derart dass eine bidirektionale optische Kopplung des Mastermoduls (2) mit einem, an einer beliebigen Stelle längs des Nutzabschnitts des Stabs angeordneten Seitenmodul (3) ermöglicht wird, wobei sich der seitliche Koppelbereich (8) über mindestens einen Zentimeter außerhalb des Stabs erstreckt.

2. Einrichtung nach Anspruch 1, **dadurch gekennzeichnet, dass** die seitlichen Reflexionsmittel (9) aus mehreren aneinandergrenzenden Einkerbungen (12) bestehen, die längs des Nutzabschnitts des Stabs (1) einen sägezahnförmigen Reflexionsbereich bilden.

3. Einrichtung nach Anspruch 2, **dadurch gekennzeichnet, dass** jede Einkerbung (12) symmetrisch geformt ist.

4. Einrichtung nach Anspruch 2, **dadurch gekennzeichnet, dass** jede Einkerbung (12) asymmetrisch geformt und durch eine erste Schräge (14), die mit einer senkrecht zur Längsachse des Lichtleitstabs (1) verlaufenden Achse einen Winkel (β₁) bildet, sowie durch eine zweite Schräge (15) begrenzt ist, die näher am zweiten Ende des Lichtleitstabs (1) liegt und mit der senkrecht zur Längsachse (S) verlaufenden Achse einen zweiten Winkel (β₂) bildet, der kleiner ist als der erste Winkel (β₁).

5. Einrichtung nach Anspruch 4, **dadurch gekennzeichnet, dass** die aneinandergrenzenden Einkerbungen (12) ein variables Teilungsmaß (p) aufweisen, das vom ersten zum zweiten Ende des Lichtleitstabs (1) kontinuierlich abnimmt.

6. Einrichtung nach Anspruch 5, **dadurch gekennzeichnet, dass** die seitlichen Reflexionsmittel (9) am Grund der Einkerbungen (12) eine innere Abflachung (16) veränderlicher Breite (l₂) aufweisen, die vom ersten zum zweiten Ende des Stabs (1) kontinuierlich abnimmt.

7. Einrichtung nach Anspruch 5, **dadurch gekennzeichnet, dass** der erste Winkel (β₁) vom ersten zum zweiten Ende des Stabs (1) kontinuierlich abnimmt.

8. Einrichtung nach irgendeinem der Ansprüche 2 bis 7, **dadurch gekennzeichnet, dass** zwischen zwei aneinandergrenzenden Einkerbungen (12) jeweils eine äußere Abflachung ausgebildet ist.

9. Einrichtung nach irgendeinem der Ansprüche 1 bis 8, **dadurch gekennzeichnet, dass** die seitlichen Reflexionsmittel (9) ein schmales Reflexionsband (17, 18, 19, 20) umfassen.

10. Einrichtung nach Anspruch 9, **dadurch gekennzeichnet, dass** das Reflexionsband als durchgehendes Rechteckband (18) ausgebildet ist.

11. Einrichtung nach Anspruch 9, **dadurch gekennzeichnet, dass** das Reflexionsband als unterbrochenes Band (20) mit mehreren reflektierenden Teilabschnitten unterschiedlicher Länge ausgebildet ist, die mit einem bestimmten Teilungsabstand in Längsrichtung angeordnet sind, wobei die Länge der reflektierenden Teilabschnitte in der Nähe des ersten Endes des Stabs (1) am geringsten ist, dann bis zu einem bestimmten Höchstwert zunimmt und anschließend bis zum zweiten Ende des Stabs (1) erneut abnimmt.

12. Einrichtung nach Anspruch 9, **dadurch gekennzeichnet, dass** das Reflexionsband als Band (19) mit veränderlicher Breite ausgebildet ist, die in der Nähe des ersten Endes des Stabs (1) am geringsten ist, dann bis zu einem bestimmten Höchstwert zunimmt und anschließend bis zum zweiten Ende des Stabs erneut abnimmt.

13. Einrichtung nach einem der Ansprüche 11 und 12, **dadurch gekennzeichnet, dass** der Höchstwert näher am zweiten Ende des Stabs (1) liegt als am ersten.

14. Einrichtung nach irgendeinem der Ansprüche 9 bis 13, **dadurch gekennzeichnet, dass** das Reflexionsband (17, 19, 19, 20) durch Aufbringen eines Materials mit einer an die Oberfläche des Stabs (1) angepassten Brechzahl hergestellt wird.

15. Einrichtung nach irgendeinem der Ansprüche 1 bis 14, **dadurch gekennzeichnet, dass** der Stab (1) an seinem ersten Ende einen Endabschnitt (10) ohne seitliche Reflexionsmittel aufweist.

16. Einrichtung nach irgendeinem der Ansprüche 1 bis 15, **dadurch gekennzeichnet, dass** der Stab (1) einen kreisrunden Querschnitt aufweist.

17. Einrichtung nach irgendeinem der Ansprüche 1 bis 15, **dadurch gekennzeichnet, dass** der Stab (1) einen ovalen Querschnitt aufweist.

18. Einrichtung nach irgendeinem der Ansprüche 1 bis 15, **dadurch gekennzeichnet, dass** der Stab (1) einen rechteckigen Querschnitt aufweist, wobei die seitlichen Reflexionsmittel (9) auf einer ersten Seitenfläche des Stabs und die Seitenmodule (3) längs des Stabs, gegenüber einer anderen Seitenfläche angeordnet sind, die die Gegenseite der ersten Seitenfläche bildet.

19. Einrichtung nach irgendeinem der Ansprüche 1 bis 18, **dadurch gekennzeichnet, dass** der Querschnitt des Stabs (1) vom ersten Ende zum zweiten Ende des Stabs kontinuierlich abnimmt.

20. Einrichtung nach irgendeinem der Ansprüche 1 bis 19, **dadurch gekennzeichnet, dass** am zweiten Ende des Stabs (1) ein Endreflektor (11) ausgebildet ist.

21. Einrichtung nach irgendeinem der Ansprüche 1 bis 20, **dadurch gekennzeichnet, dass** das zweite Ende des Stabs (1) in Bezug zur Längsachse (S) des Stabs in einem Winkel (α) abgeschrägt ist.

22. Einrichtung nach irgendeinem der Ansprüche 1 bis 21, **dadurch gekennzeichnet, dass** am ersten Ende des Stabs (1) Mittel (21) zur Aufnahme von elektrooptischen Sendeelementen (4) und optoelektronischen Empfangsmitteln (5) des Mastermoduls (2) ausgebildet sind.

23. Einrichtung nach irgendeinem der Ansprüche 1 bis 22, **dadurch gekennzeichnet, dass** die Seitenmodule (3) durch modulare Schalt- und Steuergeräte bzw. Schutzgeräte gebildet werden, die in einer Schaltanlage (22) installiert ist.

24. Einrichtung nach Anspruch 23, **dadurch gekennzeichnet, dass** die Seitenmodule (3) längs des Nutzabschnitts des Stabs (1) nebeneinander angeordnet sind.

25. Einrichtung nach Anspruch 24, **dadurch gekennzeichnet, dass** das Mastermodul (2) in einem größeren Abstand vom Lichtleitstab in der Schaltanlage (22) angeordnet und über einen zusätzlichen Lichtleitstab (23) mit einem zur Kopplung mit dem ersten Ende des Stabs (1) dienenden Koppelende in Axialrichtung optisch mit dem ersten Ende des Stabs (1) gekoppelt ist.

26. Einrichtung nach Anspruch 25, **dadurch gekennzeichnet, dass** der zusätzliche Lichtleitstab (23) senkrecht zum Lichtleitstab (1) angeordnet ist und sein Koppelende eine Außenseite, die auf dem ersten Ende des Stabs (1) aufliegt, sowie eine reflektierende Endfläche (24) umfasst, die mit dem ersten Ende des Stabs einen Winkel von 45° bildet.

27. Einrichtung nach Anspruch 24, **dadurch gekennzeichnet, dass** der Lichtleitstab (1) an seinem ersten Ende umbogen ist.
